# EUROPÄISCHE PATENTSCHRIFT

(11) **EP 1 545 269 B1**
(45) Veröffentlichungstag und Bekanntmachung des Hinweises auf die Patenterteilung: **02.06.2010**
(21) Anmeldenummer: 03807800.2
(22) Anmeldetag: 22.08.2003
(51) Int. Cl.: A47C 1/024, A47C 1/032, A47C 20/04, H02K 7/06

(54) **ELEKTROMOTORISCHER MÖBELANTRIEB**
ELECTROMOTIVE FURNITURE DRIVE
MECANISME DE COMMANDE A MOTEUR ELECTRIQUE POUR MEUBLES

(30) Priorität: 16.09.2002 DE 20214373 U; 10.02.2003 DE 20302142 U
(43) Veröffentlichungstag der Anmeldung: 29.06.2005
(73) Patentinhaber: Dewert Antriebs- und Systemtechnik GmbH, 32278 Kirchlengern (DE)
(72) Erfinder: ROITHER, Andreas, 32130 Enger (DE); MÜLLER, Christian, 32839 Steinheim (DE)
(74) Vertreter: Dantz, Jan Henning
(86) Internationale Anmeldenummer: PCT/EP2003/009326
(87) Internationale Veröffentlichungsnummer: WO 2004/032684

(56) Entgegenhaltungen:
- WO-A-02/29284
- DE-U- 20 007 393

## Beschreibung

Die Erfindung betrifft einen elektromotorischen Möbelantrieb mit wenigstens einem Antriebsmotor und mit mindestens einer Spindel, auf die eine Spindelmutter aufgesetzt ist und bei dem zumindest die Spindel bzw. die Spindeln und die Spindelmutter bzw. die Spindelmuttern in einem Gehäuse angeordnet sind, wobei jede Spindel und jede Spindelmutter einen Antriebszug bilden.

Der in Rede stehende elektromotorische Möbelantrieb ist in bevorzugter Ausführung ein sogenannter Einzelantrieb, der mit einem Antriebsmotor und einer Spindel sowie einer Spindelmutter ausgerüstet ist. Dem Antriebsmotor ist in der Normalausführung ein die Motordrehzahl herabsetzender Schneckentrieb nachgeschaltet.

Die Gehäuse der in Rede stehenden Möbelantriebe sind bislang aus einem Kunststoff gefertigt. Gleiches gilt auch für das mit der Spindelmutter verbundene Hubrohr bei einem Einzelantrieb, dessen freies Ende üblicherweise als Gabelkopf ausgebildet ist oder bei dem auf das freie Ende ein Gabelkopf aufgesetzt ist, Die Spindel ist aus Stahl gefertigt, während die Spindelmutter ebenfalls aus einem Kunststoff besteht. Je nach Bauart kann der Möbelantrieb an der dem Hubrohr abgewandten Seite ebenfalls ein Gabelkopf angeformt sein.

Bei den in Rede stehenden Möbelantrieben handelt es sich um Massenprodukte, die so preiswert wie möglich hergestellt werden sollen. Außerdem handelt es sich um Antriebe, die für den Dauerbetrieb nicht ausgelegt sind. Außerdem werden äußerst kompakte Bauweisen gefordert, da insbesondere für die Verwendung von bewegbaren Bauteilen eines Sessels die Einbauräume äußerst klein sind. Das Gehäuse des elektromotorischen Möbelantriebes ist aufgrund der hohen Werkzeugkosten relativ teuer.

In der DE 200 07 393 U1 wird ein elektromotorischer Antrieb beschrieben, dessen Antrieb nicht näher erläutert ist. Mittels eines Flansches ist daran eine Hülse festgelegt, die an der gegenüberliegenden Seite mit einer Befestigungslasche ausgerüstet ist. In die Hülse ist ein Hubrohr geführt. Dazu ist die Hülse an der dem Antrieb abgewandten Seite mit einem rohrförmigen Ansatz versehen, in dem dieses Hubrohr schließend jedoch verschiebbar geführt ist. Im Hubrohr ist eine Spindel eingesetzt, die mit dem Zapfen des Antriebes fest verbunden ist. Der nicht näher erläuterte Antrieb ist in einem Gehäuse angeordnet, welches aus Kunststoff im Spritzgießverfahren befestigt ist.

Der vorliegenden Erfindung liegt die Aufgabe zugrunde, einen Möbelantrieb der eingangs näher begchriebenen Art so zu gestalten, dass eine kompakte Bauweise erreicht wird und dass insbesondere die Kosten für das Gehäuse herabgesetzt werden und dass der Antrieb relativ hoch belastbar ist.

Die gestellte Aufgabe wird gelöst, indem das Gehäuse einen aus einem metallischen oder nicht metallischen Werkstoff bestehenden, durchgehenden Profilschienenabschnitt aufweist, und dass ein Endbereich oder dass beide Endbereiche zur Krafteinleitung als Aufhängeelemente ausgebildet ist bzw. sind, oder daß ein Endbereich oder daß beide Endbereiche als Anschlagelement bzw. Anschlagelemente ausgebildet ist bzw. sind, oder dass beide Endbereiche des Profilschienenabschnittes zur Aufnahme eines Anschlusselementes ausgebildet sind.

Durch die Verwendung eines Profilschienenabschnittes aus Metall ergeben sich eine Reihe von Vorteilen. So können beispielsweise handelsübliche Profile verwendet werden, die kostengünstig zu beziehen sind. Derartige Profile werden beispielsweise mit geeigneten Presswerkzeugen in großen Mengen hergestellt. Der Profilschienenabschnitt ist das tragende Bauteil dieses Antriebes, so dass er hoch belastbar ist. Außerdem ist ein Metall auch bei einer erhöhten Temperatur noch voll belastbar, da die Festigkeit nicht abnimmt. Außerdem handelt es sich um ein nicht brennbares Material, so dass auch die Sicherheit des Möbelantriebes erhöht wird. Ferner ist von Vorteil, dass es sich um ein stanzfähiges Material handelt, so dass eventuell notwendige Bohrungen spanlos mit einfachen Werkzeugen hergestellt werden können. Gleiches gilt auch für die Gestaltung der Endbereiche, so dass die Aufhängeelemente gebildet werden, die die Funktionen der bislang verwendeten Gabelköpfe übernehmen. So ist in einer ersten Ausführungsform vorgesehen, dass
der Profilschienenabschnitt zwei rechtwinklig zur Motordrehachse stehende Seitenstege aufweist und dass in jedem Endbereich eines Seitensteges wenigstens eine Bohrung vorgesehen ist, wobei die Bohrungen in den Seitenstegen fluchtend zueinander stehen. Durch diese Bohrungen kann dann mittels eines Bolzens ein Anschlussteil festgelegt werden. Vorteilhaft ist auch, wenn mehrere Bohrungen im Abstand in jedem Seitensteg vorgesehen sind, da dann je nach den Einbauverhältnissen wahlweise zwei fluchtende Bohrungen verwendet werden können. Ein solches Profil wäre beispielsweise ein U-Profil oder ein nach Art eines U-Profils gestaltetes Profil. Ferner ist auch ein C-Profil eine bevorzugte Ausführung.

Es können jedoch auch Profile verwendet werden, die der Länge nach überwiegend geschlossen sind und in mindestens einem Endbereich eine seitliche Öffnung oder Ausklingung, beispielsweise zur Aufnahme von Bauteilen aufweisen. Somit kann auf einfachste Art und Weise das Innere des elektromotorischen Möbelantriebes gegebenenfalls unter Hinzunahme geeigneter Dichtelemente gegen Umwelteinflüsse von außen geschützt sein.

Der elektromotorische Möbelantrieb ist so ausgelegt, dass die durch das Aufhängeelement beispielsweise durch die Aufhängeelemente einleitbaren Kräfte vollständig oder nahezu vollständig über den Profilschienenabschnitt und/oder über einen Getriebewinkel ableitbar sind. Dadurch werden die restlichen Bauteile des Möbelantriebes gering belastet, so dass die Abmessungen entsprechend gering sind, so dass der Möbelantrieb kompakt gebaut werden kann.

Bei einer Ausführung des elektromotorischen Möbelantriebes mit nur einem Antriebszug wird auf einen als Anschlussteil ausgebildeten Abschnitt des Profilschienenabschnittes verzichtet. Hier ist vorgesehen, dass das Anschlussteil entweder Teil eines Getriebewinkels ist oder als Zusatzbauteil an dem Getriebewinkel anbringbar ist. Da der Antriebszug des elektromotorischen Möbelantriebes an dem Profilschienenabschnitt befestigt ist, werden auch Kräfte auf diesen übertragen. In einer Ausführungsform ist denkbar, dass die Festlegung des Antriebszuges an dem Profilschienenabschnitt nicht örtlich gebunden ist. Die Befestigung des Antriebszuges könnte formschlüssig beispielsweise über Schnapphaken realisiert werden, welche in Bohrungen des Profilschienenabschnittes eingreifen. Eine weitere formschlüssige Festlegung könnte über Sicken oder Aufkantungen erfolgen, die in oder an dem Profilschienenabschnitt angeformt, eingeformt oder angesetzt sind. Eine kraftschlüssige Befestigung könnte beispielsweise durch Klemmung erfolgen. Somit ist der Ort zur Festlegung des Antriebszuges variabel gestaltbar. Die Festlegung des Antriebszuges erfolgt demzufolge form- und/oder kraftschlüssig.

Der Grundquerschnitt des Profilschienenabschnittes ist über die Länge nahezu gleichbleibend und einteilig. Unter dem Grundquerschnitt ist der Querschnitt zu verstehen, der vor eventuellen Bearbeitungen vorliegt. Durch die Einteiligkeit entfällt das Zusammenfügen von zwei oder mehreren Profilen, so dass der als tragendes Teil anzusehende Profilschienenabschnitt äußerst kostengünstig herzustellen ist.

Ferner ist der Profilschienenabschnitt so ausgelegt, dass er als Führungsschiene für die linear beweglichen Teile verwendet werden kann, insbesondere für die Spindelmutter. Weiterhin ist der Profilschienenabschnitt so ausgelegt, dass der Antriebszug oder die Antriebszüge längs und/oder quer in den Profilschienenabschnitt einsetzbar sind.

In weiterer Ausgestaltung ist noch vorgesehen, dass der Antriebsmotor an einem an den Profilschienenabschnitt festgelegten Getriebewinkel befestigt ist. Dieser Getriebewinkel hat zwei rechtwinklig zueinander stehende Flächen. Ferner ist noch vorgesehen, dass der Getriebewinkel ein- oder mehrteilig ausgebildet ist, und dass darin auch die Spindel mit dem Schneckenrad gelagert ist. Der elektromotorische Möbelantrieb ist so ausgelegt, dass er sinngemäß nach dem Prinzip eines Baukastens gestaltet ist.

Zweckmäßigerweise ist der Getriebewinkel zweiteilig ausgebildet, da dadurch die Montage noch erleichtert wird.

Da die in Rede stehenden elektromotorischen Möbelantriebe für die unterschiedlichsten Bauformen von Möbeln verwendet werden, ist noch vorgesehen, dass auch in dem die parallel zueinander stehenden Seitenstege verbindenden Mittelsteg wenigstens eine Bohrung vorgesehen ist. Auch diese Bohrung könnte dann im Bedarfsfall zur Verbindung mit einem Anschlussteil verwendet werden. Diese Bohrung könnte auch noch gegenüber den Bohrungen in den parallelen Seitenstegen versetzt sein. Die Abmessungen eines Gabelkopfes sind relativ gering. Da es erforderlich sein kann, dass auch die Abmessungen des Endbereiches des Profilschienenabschnittes verringert werden, ist vorgesehen, dass zumindest die Endbereiche der Seitenstege als Aufhängelaschen ausgebildet sind, wobei der Endbereich als Kreisbogen ausgebildet ist und das die Mittelpunkte der Bohrungen im Zirkelschlag des Kreisbogens liegen. Die Herstellung der Aufhängelaschen ist besonders einfach, da dazu ein einfaches Stanzwerkzeug verwendet werden kann.

Bei den sogenannten Einzelantrieben ist auf die Spindelmutter ein Hubrohr fest aufgesetzt. Auf dieses Hubrohr ist am freien Ende ebenfalls ein Gabelkopf befestigt. Für den erfindungsgemäßen Möbelantrieb ist deshalb vorgesehen, dass auch das Hubrohr aus Metall, vorzugsweise aus Stahl besteht, und dass in dem freien, der Spindelmutter abgewandten Endbereich Anschlussbohrungen vorgesehen sind. Diese Anschlussbohrungen sind als Durchgangsbohrungen ausgebildet, so dass wiederum ein Bolzen hindurch gesteckt werden kann. Je nach Verwendungszweck kann jedoch auch das Hubrohr entfallen. In einer Variante ist vorgesehen, dass der Profilschienenabschnitt aus einer Profilschiene mit einem offenen Querschnitt gebildet ist und dass die Spindelmutter mit einem Führungsklotz verbunden ist, der die Kontur des Profilschienenabschnittes zumindest an einer Seite überragt und mit einer der Außenkontur des Profilschienenabschnittes entsprechenden Durchbrechung versehen ist. An den Führungsklotz kann dann das zu verstellende Bauteil angeschlossen werden, so dass eine äußerst kompakte Bauweise erreicht wird. In weitere Ausgestaltung ist vorgesehen, dass die Spindelmutter und der Führungsklotz ein einstückiges Formteil bilden. Ferner ist vorgesehen, dass der Führungsklotz den Profilschienenabschnitt rundum überragt, so dass alle Flächen als Anlageflächen für ein anzuschließendes Bauteil verwendet werden können.

Der Profilschienenabschnitt ist in bevorzugter Ausführung ein offenes Profil. Zum Schutz gegen das Eindringen von Schmutz und dergleichen ist vorgesehen, dass die Öffnung des Profilschienenabschnittes durch ein Abdeckelement verschlossen ist. Dieses Abdeckelement kann verschiedenartig gestaltet sein und es können Öffnungen vorgesehen sein, durch die beispielsweise die Anlenkhebel geführt sind.

So ist es beispielsweise möglich, dass das Abdeckelement aus einem flexiblen Material, beispielsweise aus einem Kunststoffolienstreifen, besteht. Ein solcher Streifen könnte dann die Öffnung übergreifen, so dass die Festlegung durch Kleben erfolgt. Es ist jedoch auch möglich, dass das Abdeckelement als knicksteifer Streifen ausgebildet ist, der form- und/oder kraftschlüssig an den die Öffnung begrenzenden Rändern festgelegt ist. Ein derartiger Streifen würde den Profilschienenabschnitt noch zusätzlich stabilisieren.

Der bereits erwähnte Führungsklotz hätte dann eine Durchbrechung für das Abdeckelement. Diese Durchbrechung ist so ausgelegt, dass die die Durchbrechung begrenzenden Flächen berührungsfrei zum Abdeckelement stehen. Demzufolge würde um das Abdeckelement herum ein Luftspalt entstehen. Die Einstellungen der Spindelmutter müssen festgelegt werden. Es ist deshalb vorgesehen, dass in dem Abdeckelement Endschalter zur Begrenzung der Endstellungen der Spindelmutter vorgesehen sind.

Alternativ könnten auch die Endschalter im Profilschienenabschnitt eingesetzt sein. Ferner wäre es ebenfalls möglich, dass sie auf eine Endschalterleiste gesetzt werden, die dann wiederum am Profilschienenabschnitt oder am Abdeckelement fest angesetzt ist. Schließlich ist es noch vorteilhaft, wenn die Endbereiche des Profilschienenabschnittes durch Endkappen verschlossen sind. Diese Endkappen können form- und/oder kraftschlüssig am Profilschienenabschnitt festgelegt werden. Es ist jedoch auch möglich, dass sie durch Schweißung festgelegt sind. Die Endkappen tragen zur weiteren Verstärkung des Profilschienenabschnittes bei.

Je nach Ausführung des elektromotorischen Möbelantriebes wird aus dem Profilschienenabschnitt, den Endkappen und/oder dem Abdeckelement das Gehäuse des elektromotorischen Möbelantriebes gebildet.

Für die in Rede stehenden elektromotorischen Möbelantriebe werden Antriebsmotoren mit einer bestimmten Leistung verwendet. Es kann jedoch in der Praxis passieren, daß die von den Spindeln aufgebrachten Kräfte nicht ausreichend sind. Es ist deshalb noch in weiterer Ausgestaltung vorgesehen, daß der elektromotorische Möbelantrieb mit mindestens zwei Antriebsmotoren und einer entsprechenden Anzahl von Spindeln ausgestattet ist, die parallel und im Abstand zueinander stehen. Entsprechend der Anzahl der Antriebsmotoren wird dann die von den Spindeln aufgebrachte Gesamtkraft erhöht. Sinngemäß wird durch eine derartige Anordnung ein Baukastensystem gebildet. In bevorzugter Ausführung werden jedoch Möbelantriebe mit zwei Antriebsmotoren und zwei Spindeln verwendet. Zweckmäßigerweise stehen dann die Drehachsen der Antriebsmotoren bzw. der Rotoren fluchtend zueinander sowie quer zu dem Profilabschnitt bzw. zu den Profilabschnitten. Es ist vorteilhaft, wenn die Spindeln sowohl höhenmäßig als auch in ihrer Längsrichtung versatzfrei zueinander angeordnet sind. Für die Ausführung des Profilschienenabschnittes gibt es mehrere Möglichkeiten. So ist beispielsweise in einer ersten Ausführung vorgesehen, daß die Spindeln in einem einzigen Profilschienenabschnitt angeordnet sind. Sofern der Möbelantrieb dann mit zwei Antriebsmotoren ausgestattet ist, sind diese den beiden Außenstegen zugeordnet. In einer zweiten Ausführungsform mit mehreren Spindeln ist vorgesehen, daß der Profilschienenabschnitt aus mindestens zwei nebeneinander angeordneten Einzelschienen besteht, die sowohl höhenmäßig als auch in der Länge versatzfrei nebeneinander angeordnet sind. Die Einzelschienen sind querschnittsgleich. Die Drehzahl der Spindel bzw. der Spindeln ist im Normalbetrieb deutlich geringer als die Drehzahl des Rotors jedes Antriebsmotors. Es ist deshalb vorgesehen, daß jeder Antriebsmotor als Antriebsgetriebemotor ausgebildet ist. Die Getriebe können verschiedenartig gestaltet sein. So ist in einer bevorzugten Ausführung vorgesehen, daß das Getriebe mit sich kreuzenden Wellen ausgestattet ist. Ein derartiges Getriebe wäre beispielsweise ein Schneckentrieb.

Entgegen dieser Ausführung können die Getriebe jedoch auch mit parallel und im Abstand zueinander angeordneten Wellen ausgestattet sein. Ein derartiges Getriebe wäre ein Rädergetriebe, beispielsweise auch ein Umlaufgetriebe.

In einer weiteren Ausführung könnten die Antriebsgetriebemotoren auch als Stabantriebe ausgebildet sein. Das Getriebe ist dann in der Regel ein Umlaufgetriebe, wobei die Zentralachse mit der Drehachse des Rotors des Antriebsmotors fluchtet. Es ist bei den in Rede stehenden Möbelantrieben nicht unbedingt notwendig, daß auf die Spindel bzw. auf die Spindeln Spindelmutter aufgesetzt sind. So ist der Möbelantrieb ebenfalls funktionsfähig, wenn die Spindeln gegen Drehung gesichert und in ihrer Längsrichtung verfahrbar sind. Das Abtriebsglied des die Motordrehzahl herabsetzenden Getriebes ist dann ein Rotationskörper, der mit einer Innengewindebohrung versehen ist. Bei Drehung wird deshalb die Spindel in ihrer Längsrichtung verfahren

Eine weitere Alternative ist noch darin zu sehen, wenn die Spindel bzw. die Spindeln ortsfest angeordnet sind, wobei das Abtriebsglied des die Drehzahl herabsetzenden Getriebes wiederum ein Rotationskörper mit einer Innengewindebohrung ist. Bei Drehung des Rotationskörpers verfährt dann der komplette Antriebszug auf der Spindel. Von dieser Linearbewegung wird dann die Verstellbewegung eines Möbelbauteiles abgeleitet. Der Grundquerschnitt jedes Profilstabes kann über die gesamte Länge gleichbleibend sein, wobei unter dem Grundquerschnitt der Querschnitt des unbearbeiteten Rohlings zu verstehen ist. Es ist jedoch auch möglich, daß der Grundquerschnitt zwecks Anpassung an die Bauform abschnittsweise unterschiedlich ist. Jeder Profilschienenabschnitt könnte in bevorzugter Ausführung aus Metall bestehen. Dabei ist besonders an eine Ausführung in Stahl gedacht. Es können jedoch auch andere Werkstoffe zum Einsatz kommen, beispielsweise Holz oder holzartige Werkstoffe oder auch ein geeigneter Kunststoff.

In weiterer Ausgestaltung ist noch vorgesehen, dass zur Ansteuerung und/oder zur Energieversorgung des Elektromotors Steuerungs- und/oder Energieversorgungskomponenten in das Gehäuse einsetzbar oder an das ansetzbar sind. An das Gehäuse des elektromotorischen Möbelantriebes kann je nach Bauart ein weiteres Gehäuse angesetzt sein, worin Komponenten zur Steuerung und/oder zur Energieversorgung des Elektromotors untergebracht sind. Diese Komponenten könnten auch innerhalb des Gehäuses angeordnet sein, wobei auch eine Lösung denkbar ist, bei der nur die Steuerplatine in das Gehäuse eingesetzt und die restlichen Komponenten in das an das Gehäuse angesetzte Gehäuse angeordnet sind.

Anhand der beiliegenden Zeichnungen wird die Erfindung noch näher erläutert.

### Es zeigen:

- Figur 1: eine Ausführungsform des erfindungsgemäßen Möbelantriebes in einer perspektivischen Darstellung und
- Figur 2: den Möbelantrieb nach der Figur 1 in einer Schnittdarstellung,
- Figur 3: eine weitere Ausführungsform des erfindungsgemäßen Möbelantriebes mit geschnittenem Profilschienenabschnitt,
- Figur 4: den elektromotorischen Möbelantrieb nach der Figur 3 in einer Ansicht,
- Figur 5: den elektromotorischen Möbelantrieb in einer weiteren Ausführungsform mit einem Führungsklotz,
- Figur 6 und 7: eine Ausführungsform mit zwei Spindeln in unterschiedlichen Bauweisen.

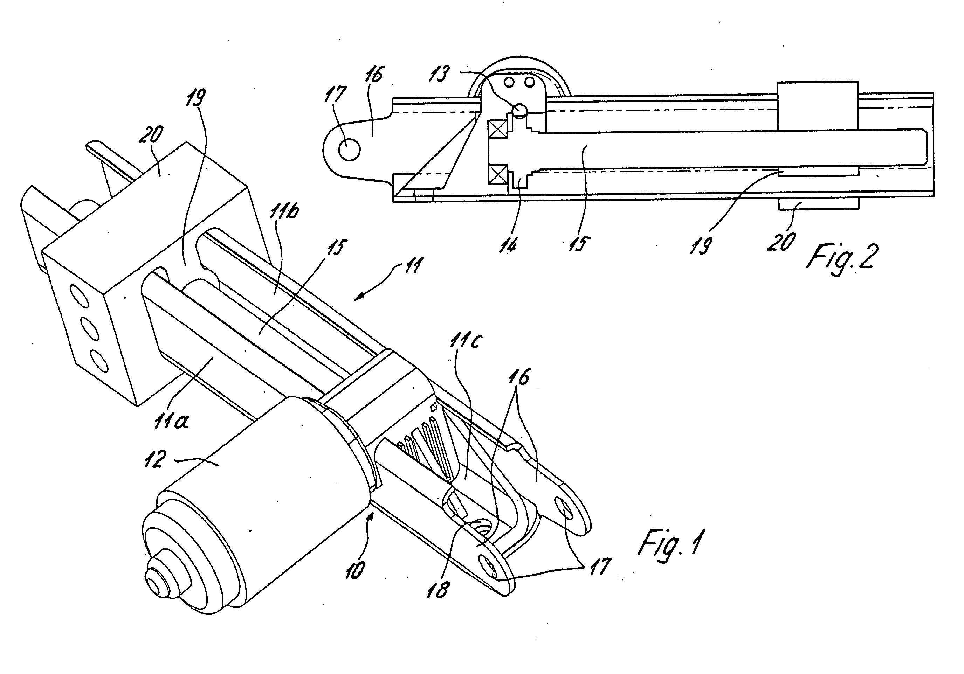

Der in den Figuren 1 und 2 dargestellte elektromotorische Möbelantrieb 10 hat als eine die Führung bewirkende Bauleitaufnahme einen Profilschienenabschnitt 11, dessen Querschnitt in vielen Ausführungen ausgelegt sein kann.

Im dargestellten Ausführungsbeispiel ist der Profilschienenabschnitt 11 ein offenes Profil, das heißt, der Querschnitt ist U-förmig, wobei die freien Endbereiche der parallelen Schenkel in einem Bogen verlaufen und aufeinander zugerichtet sind. Die beiden parallelen Schenkel sind durch die Bezugszeichen 11a und 11b gekennzeichnet. An dem in der Darstellung linken Schenkel 11a befindet sich ein Antriebsmotor 12, welchem ein Getriebe nachgeschaltet ist, das aus einer rotierend antreibbaren Schnecke 13 und einem damit in Eingriff stehenden Schneckenrad 14 besteht. Das Schneckenrad 14 ist drehfest auf einen Endbereich einer Spindel 15 aufgesetzt. Die Spindel 15 und das Schneckenrad 14 könnten auch ein einstückiges Formteil bilden. Die Spindel 15 ist neben dem Schneckenrad in mindestens einem Lager gelagert. Bei dem gezeichneten Ausführungsbeispiel sind die der Spindel 15 abgewandt liegenden Endbereiche der beiden Schenkel 11a, 11b des Profilschienenabschnittes 11 als Laschen 16 ausgebildet, wobei das Ende kreisbogenförmig verläuft. Im Zirkelschlag dieses Kreisbogens sind Bohrungen 17 vorgesehen, so dass der endseitige Kreisbogen jedes Schenkels 11a, 11b konzentrisch zur Bohrung 17 verläuft. In nicht dargestellter Weise könnten die Schenkel 11a, 11b auch mit weiteren, fluchtend zueinander stehenden Bohrungen ausgestattet sein. Im dargestellten Ausführungsbeispiel ist auch der die beiden parallelen Schenkel 11a, 11b verbindende Mittelsteg 11c mit einer Bohrung 18 ausgestattet, die in Richtung zum Antriebsgetriebemotor 12 gegenüber den Bohrungen 17 versetzt ist. Auch in diesen Mittelsteg 11c könnten noch weitere Bohrungen angeordnet sein. Entgegen der Darstellung könnten auch die Laschen 16 entfallen, so dass die Bohrungen 17 direkt in den parallelen Schenkeln 11a, 11b angeordnet wären. Ferner wäre es durchaus denkbar, dass der Mittelsteg 11c gekürzt wird und dass die gegenüber seiner freien Stirnfläche vorstehenden Bereiche der parallelen Schenkel 11a, 11b gekröpft würden, wobei vorzugsweise die Kröpfung den Abstand verringern würde. Ferner wäre es denkbar, dass entgegen der Darstellung eine Aufhängelasche an den Endbereich des Mittelsteges 11c angespritzt würde.

Auf die Spindel 15 ist eine Spindelmutter 19 aufgesetzt, die mit einem Führungsklotz 20 ein einstückiges Formteil bildet. Der Führungsklotz 20 überragt im dargestellten Ausführungsbeispiel die Außenkontur des Profilschienenabschnittes 11 rundum, so dass alle äußeren Flächen als Anlageflächen für anzuschließende Bauteile zur Verfügung stehen. An dem Führungsklotz 20 können Ausnehmungen und Aufsätze angesetzt oder angeformt sein, die als Anlage für anzuschließende Bauteile benutzt werden können. Solche Bauteile sind beispielsweise Betätigungshebel eines Beschlages für ein Lattenrost oder für einen Sessel. Der Führungsklotz 20 ist mit einer an den Querschnitt des Profilschienenabschnittes 11 angepassten Durchbrechung versehen, so dass er schließend auf dem Profilschienenabschnitt 11 geführt ist.

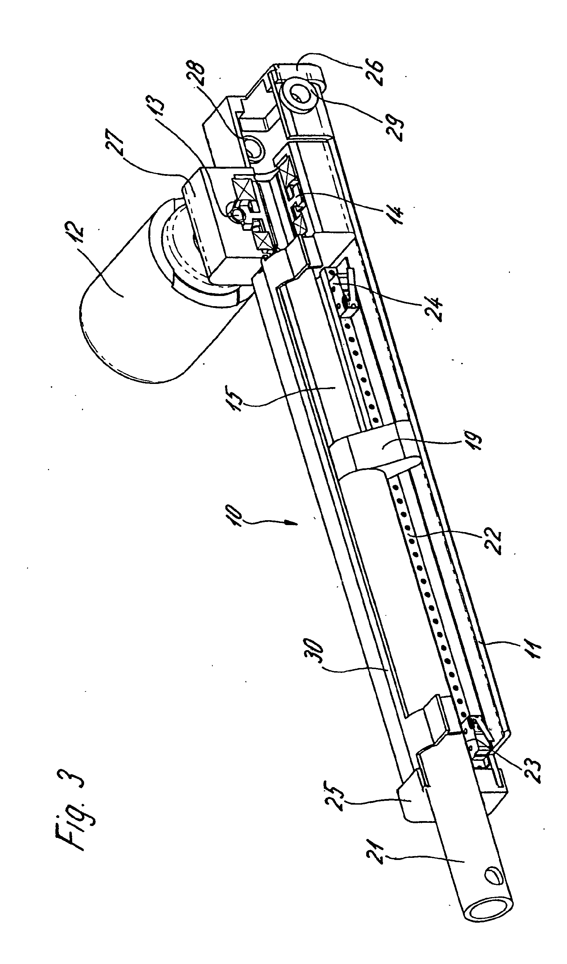

Die Figur 3 zeigt einen elektromotorischen Antrieb, bei dem auf die Spindelmutter 19 ein Hubrohr 21 festgesetzt ist. Der aus der Schnecke 13, dem Schneckenrad 14 und der Spindel 15 gebildete Antriebszug ist prinzipiell gleich wie bei der Ausführung nach den Figuren 1 und 2.
Die Figur 3 zeigt deutlich, dass der Profilschienenabschnitt 11 als Führungsprofil für die Spindelmutter 19 ausgelegt ist. Ferner zeigt diese Figur, dass innenseitig an dem Profilschienenabschnitt 11 eine Endschalterleiste 22 festgesetzt ist, auf die zwei Endschalter 23, 24 aufgesteckt sind, um die Endstellungen der Spindelmutter 19 zu begrenzen. Ferner zeigt die Figur, dass die Stirnenden durch Endkappen 25, 26 verschlossen sind, wobei jedoch die Endkappe 25 eine Öffnung für das Hubrohr 21 aufweist. Ferner zeigt die Figur, dass der Antriebsmotor und die Schnecke 13 in einem Getriebewinkel 27 befestigt sind. An diesem Getriebewinkel 27 kann auch die Endkappe 26 befestigt sein bzw. diese beiden Teile könnten einstückig sein.

An der Unterseite des Verbindungsbereiches zwischen dem Getriebewinkel 27 und der Endkappe 26 ist ein Ring 28 angesetzt, der als Einhängeelement dient. Fluchtend zu diesem Ring 28 ist an der anderen Seite ebenfalls ein Ring 29 angesetzt, so dass beispielsweise eine Welle durch diese Ringe 28, 29 und entsprechende Bohrungen des Profilschieneabschnittes 11 gesteckt werden kann.

Zumindest der Ring 28 könnte mit dem Getriebewinkel 27 und der Endkappe 26 ein einstückiges Formteil bilden, wobei es auch noch möglich ist, dass zu diesem Formteil noch der Ring 29 gehört. Die offene Seite des Profilschienenabschnittes 11 ist durch eine Abdeckschiene 30 verschlossen, die jedoch aus Darstellungsgründen ausgeklinkt ist, um das Innenleben zu zeigen. Die Querschnittsform ergibt sich jedoch aus den beiden Endbereichen. Diese Abdeckschiene 30 kann formschlüssig an den die Öffnung begrenzenden Rändern festgelegt werden. Sie kann jedoch beispielsweise auch noch mit der Endkappe 25 verbunden werden.

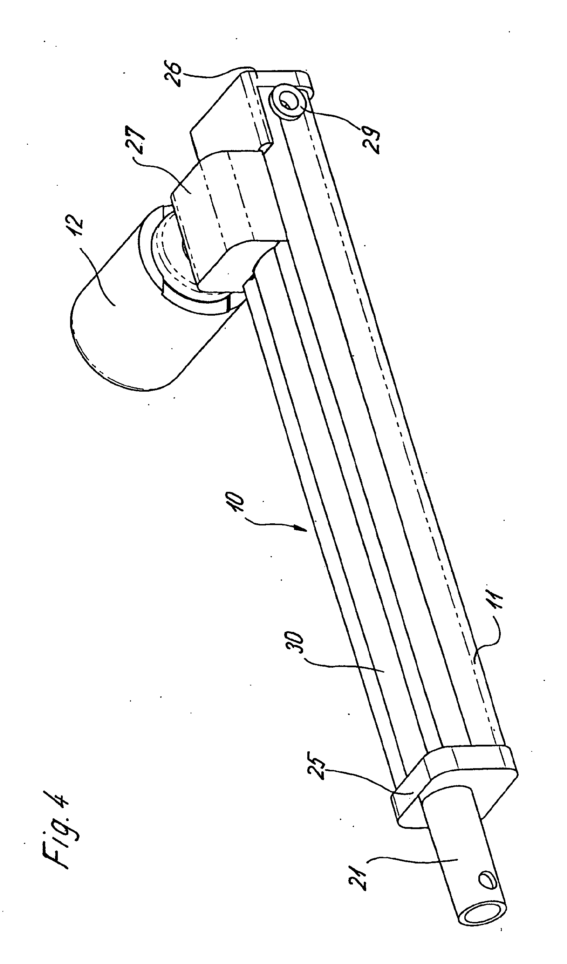

Die Ausführung nach der Figur 4 zeigt den elektromotorischen Möbelantrieb in einer Ansicht. Daraus ergibt sich, dass bei dieser Ausführung das Gehäuse des elektromotorischen Möbelantriebes aus dem Profilschienenabschnitt 11, aus den beiden Endkappen 25, 26 und der Abdeckschiene 30 gebildet ist.

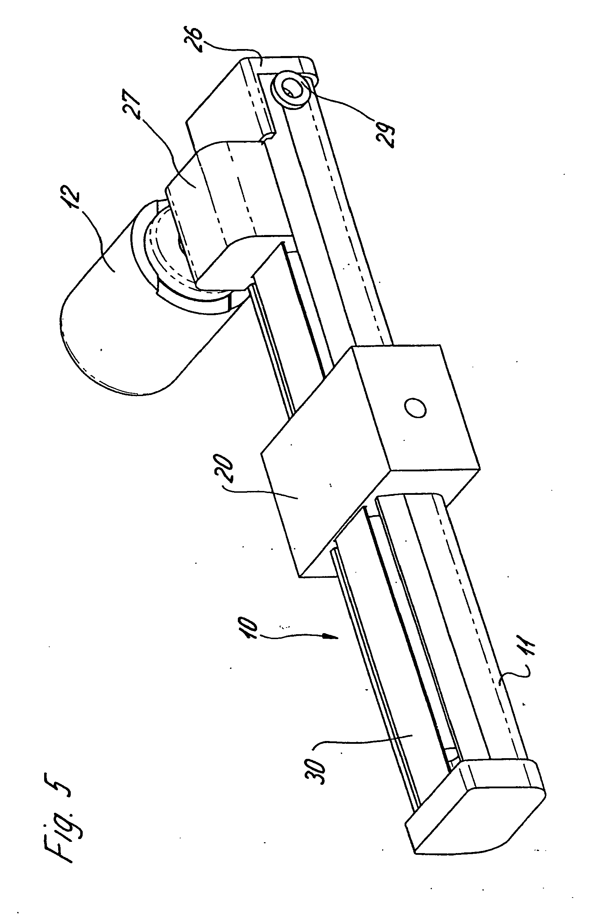

Bei der Ausführung nach der Figur 5 ist die Öffnung des Profilschienenabschnittes 11 ebenfalls durch einen Abdeckstreifen oder durch ein Abdeckelement 30 verschlossen. Dieser elektromotorische Möbelantrieb 10 ist wiederum mit dem Führungsklotz 20 ausgestattet, der mit der Spindelmutter 19 verbunden ist. Er ist außerdem mit einer Durchbrechung versehen, durch die die Abdeckschiene oder der Abdeckstreifen 30 geführt ist. Die Durchbrechung ist so ausgelegt, dass zwischen den Flächen der Durchbrechung und der Abdeckschiene 30 keine Berührung stattfindet.

In nicht dargestellter Weise könnte der elektromotorische Möbelantrieb 10 auch ein Doppelantrieb mit einem oder mit zwei Antriebsgetriebemotoren 12 und zwei Spindeln 15 ausgestattet sein. Vorzugsweise wären dann beide Endbereiche des Profilschienenabschnittes 11 als Aufhängeelemente gestaltet.

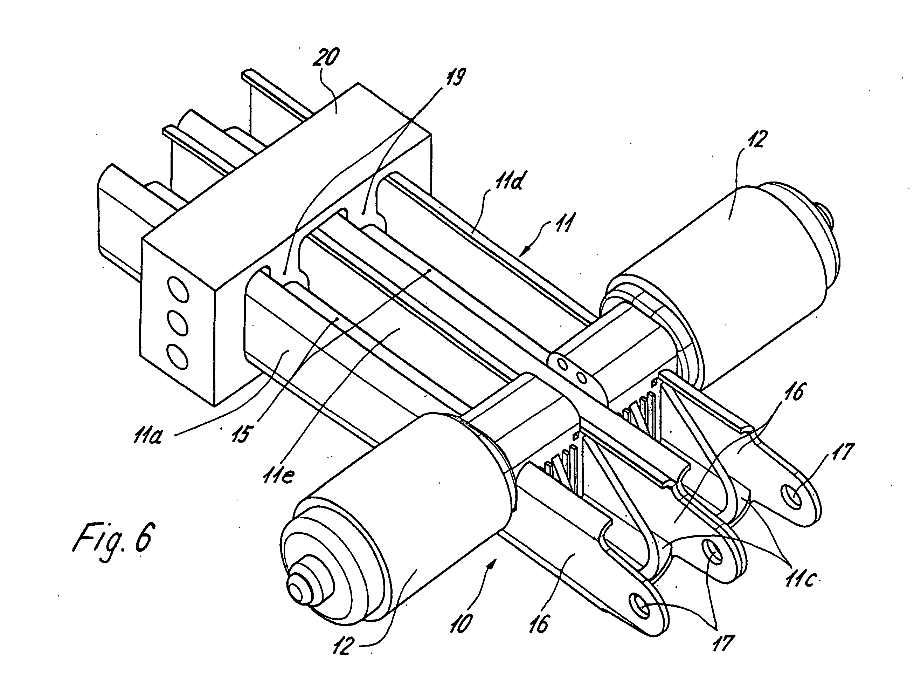

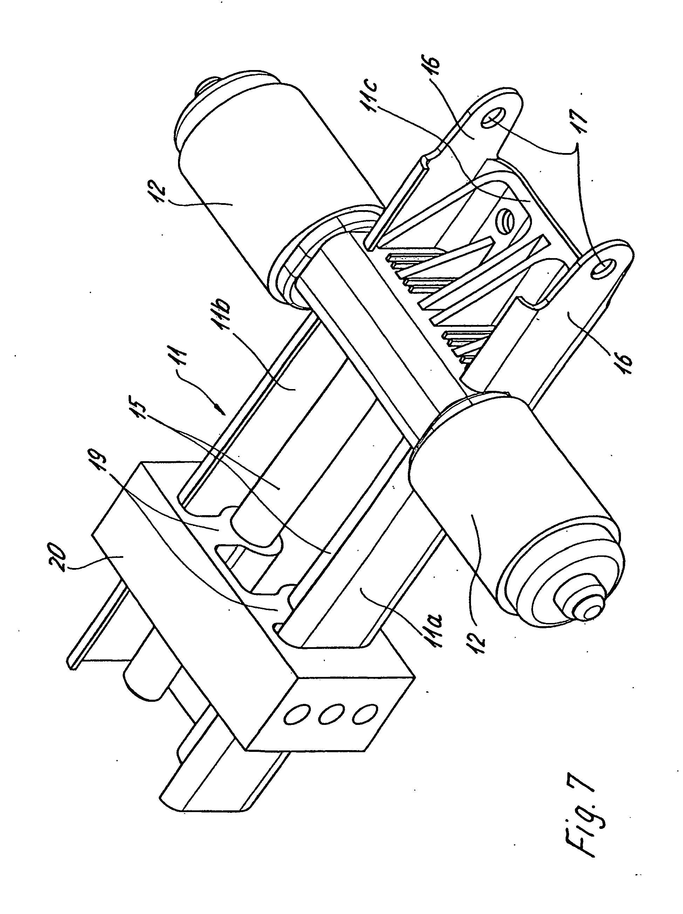

Die beiden Ausführungen gemäß den Figuren 6 und 7 sind mit zwei Spindeln 15 ausgestattet, die parallel und im Abstand zueinander verlaufen. Im Gegensatz zu der dargestellten Ausführung wäre es auch denkbar, daß mehr als zwei Spindeln 15 verwendet werden. Die beiden Spindeln 15 sind höhenmäßig und in ihren Längsrichtungen unversetzt zueinander angeordnet. Jede Spindel 15 wird von einem zugeordneten Antriebsgetriebemotor 12 angetrieben. Das die Motordrehzahl herabsetzende Getriebe ist in bevorzugter Ausführung ein Schneckentrieb, wobei die Schnecke entweder drehfest auf den Abtriebszapfen des Antriebsmotors 12 aufgesetzt werden kann oder der Abtriebszapfen 12 ist als Schnecke ausgebildet.

Auf jede Spindel 15 ist jeweils eine Spindelmutter 19 aufgesetzt, die ein einstückiges Bauteil mit dem Führungsklotz 20 bilden. Während bei der Ausführung nach der Figur 6 zwei Einzelschienen 11 d, 11e den Profilschienenabschnitt 11 bilden, wird bei der Ausführung gemäß Figur 7 ein einziger Profilschienenabschnitt 11 für die Aufnahme der beiden Spindeln 15 verwendet. Die Breite dieses Profilschienenabschnittes entspricht der Breite der beiden aneinander gelegten Einzelschienen. Wie die Figur 6 zeigt, sind die beiden Einzelschienen 11d und 11e sowohl höhenmäßig als auch in ihren Längsrichtungen nicht zueinander versetzt. Die beiden Einzelschienen 11d, 11e können über mechanische Verbindungselemente noch miteinander verbunden werden, obwohl sie durch den Führungsklotz 20 und die nicht dargestellten, durch Bohrungen 17 gesteckten Bolzen zusammengehalten werden.

Die Erfindung ist nicht auf das dargestellte Ausführungsbeispiel beschränkt. wesentlich ist, dass das tragende bzw. das die Stabilität bewirkende Bauteil ein Profilschienenabschnitt 11 aus einem Metall, vorzugsweise aus einem Stahl ist. Dabei soll nach Möglichkeit auf Anschlusselemente, wie zum Beispiel Gabelköpfe und dergleichen verzichtet werden.

## Patentansprüche

1. Elektromotorischer Möbelantrieb (10), mit wenigstens einem Antriebsmotor (12) und mit mindestens einer Spindel (15), auf die eine Spindelmutter (19) aufgesetzt ist, und bei dem zumindest die Spindel (15) bzw, die Spindeln und die Spindelmutter (19) bzw. die Spindelmuttern in einem Gehäuse angeordnet ist, wobei jede Spindel (15) und jede Spindelmutter (19) einen Antriebszug bilden, **dadurch gekennzeichnet, dass** das Gehäuse aus einem metallischen Werkstoff bestehenden, durchgehenden Profilschienenabschnitt (11) mit einem offenen Querschnitt gebildet ist, dass die einleitbaren Kräfte vollständig oder nahezu vollständig über den Profilschienenabschnitt (11) und/oder über einen Getriebewinkel (27) ableitbar sind, wobei ein Anschlussteil entweder Teil des Getriebewinkels (27) oder als Zusatzbauteil an dem Getriebewinkel (27) anbringbar ist, dass der Grundquerschnitt des Profilschienenabschnittes (11) gleich ist oder dass abschnittsweise die Querschnitte unterschiedlich, jedoch U-förmig oder C-förmig sind, und dass die den elektromotorischen Möbelantrieb (10) bildenden Antriebsteile nach Art eines Baukastens ausgebildet sind, wobei jeder Antriebszug in dem Profilschienenabschnitt (11) form- und oder kraftschlüssig festgelegt ist.

2. Elektromotorischer Möbelantrieb nach Anspruch 1, **dadurch gekennzeichnet, dass** ein Endbereich oder dass beide Endbereiche des Profilschienenabschnittes (11) zur Krafteinleitung als Anschlagelement bzw. Anschlagelemente (16, 17) ausgebildet ist bzw. sind, oder dass ein Endbereich oder dass beide Endbereiche des Profilschienenabschnittes (11) zur Aufnahme jeweils eines Anschlusselementes ausgebildet sind.

3. Elektromotorischer Möbelantrieb nach Anspruch 1, **dadurch gekennzeichnet, dass** der Grundquerschnitt des Profilschienenabschnittes (11) über die Länge gleichbleibend ist, und dass der Profilschlenenabschnitt (11) einteilig ausgebildet ist.

4. Elektromotorischer Möbelantrieb nach einem oder mehreren der vorhergehenden Ansprüche 1 bis 3, **dadurch gekennzeichnet, dass** der Profilschienenabschnitt (11) als Führungsschiene zumindest für die Spindelmutter (19) ausgebildet ist.

5. Elektromotorischer Möbelantrieb, nach einem oder mehreren der vorhergehenden Ansprüche, **dadurch gekennzeichnet, dass** der Antriebsmotor (12) des elektromotorischen Möbelantriebes (10) an einem Getriebewinkel festgelegt ist, der ein- oder mehrteilig ausgebildet ist und zwei rechtwinklig zueinander stehende Flächen aufweist.

6. Elektromotorischer Möbelantrieb nach Anspruch 1, **dadurch gekennzeichnet, dass** der Profilschienenabschnitt (11) zwei rechtwinklig zur Motordrehachse stehende Seitenstege (11a, 11b) aufweist und dass in jedem Endbereich eines Seitensteges (11a, 11b) wenigstens eine Bohrung (17) vorgesehen ist und dass die Bohrungen (17) beider Seitenstege (11a, 11b) fluchtend zueinander stehen.

7. Elektromotorischer Möbelantrieb nach Anspruch 6, **dadurch gekennzeichnet, dass** auch in dem die parallel zueinander stehenden Seitenstege (11a, 11b) verbindenden Mittelsteg (11c) wenigstens eine Bohrung (18) vorgesehen ist,

8. Elektromotorischer Möbelantrieb nach Anspruch 7, **dadurch gekennzeichnet, dass** die im Mittelsteg (11c) vorgesehene Bohrung (18) im Versatz zu den Bohrungen derparallelen Seitenstege (11a, 11b) steht.

9. Elektromotorischer Möbelantrieb nach einem oder mehreren der vorhergehenden Ansprüche 1 bis 8, **dadurch gekennzeichnet, dass** zumindest die Endbereiche der Seitenstege (11a, 11b) des Profilschienenabschnittes (11) als Aufhängelaschen ausgebildet sind und dass ein als Aufhängelasche ausgebildetes Anschlussteil ein einstückiges Formteil mit einem Getriebewinkel (27) bildet, oder als Zusatzteil an den Getriebewinkel (27) angesetzt ist.

10. Elektromotorischer Möbelantrieb nach Anspruch 9, **dadurch gekennzeichnet, dass** der Endbereich jeder Aufhängelasche als Kreisbogen ausgebildet ist und dass im Zirkelschlag des Kreisbogens der jeweilige Mittelpunkt der Bohrung (17) liegt.

11. Elektromotorischer Möbelantrieb nach Anspruch 1, **dadurch gekennzeichnet, dass** an den Endbereich des Profilschienenabschnittes (11) ein vorzugsweise mittig zwischen den parallelen Seitenstegen (11a, 11b) stehende Aufhängelasche angespritzt ist.

12. Elektromotorischer Möbelantrieb nach einem oder mehreren der vorhergehenden Ansprüche 1 bis 10, **dadurch** gekenntzeichnet, dass die als Aufhängeelemente ausgebildeten Endbereiche der Seitenstege (11a, 11b) gekröpft sind, vorzugsweise derart gekröpft sind, dass der Abstand verringert ist.

13. Elektromotorischer Möbelantrieb nach einem oder mehreren der vorhergehenden Ansprüche 1 bis 12, bei dem auf die auf die Spindel (15) aufgesetzte Spindelmutter (19) ein Hubrohr fest aufgesetzt, **dadurch gekennzeichnet, dass** das Hubrohr aus Metall, vorzugsweise aus Stahl besteht, und dass in dem freien, der Spindelmutter (19) abgewandte Endbereich Anschlussbohrungen zur Aufnahme eines Bolzens, eines Stiftes oder dergleichen vorgesehen sind.

14. Elektromotorischer Möbelantrieb nach einem oder mehreren der vorhergehenden Ansprüche 1 bis 12, **dadurch gekennzeichnet, dass** die Spindelmutter (19) mit einem Führungsklotz (20) verbunden ist, der die Kontur des Profilschienenabschnittes (11) zumindest an einer Seite überragt und der mit einer der Außenkontor des Profilschienenabschnittes (11) entsprechenden Durchbrechung zur schließenden Führung versehen ist.

15. Elektromotorischer Möbelantrieb nach Anspruch 14, **dadurch gekennzeichnet, dass** die Spindelmutter (19) und der Führungsklotz (20) ein einstückiges Formteil bilden.

16. Elektromotorischer Möbelantrieb nach Anspruch 14 oder 15, **dadurch gekennzeichnet, dass** der Führungsklotz (20) den Profilschienenabschnitt (11) allseitig überragt.

17. Elektromotorischer Möbelantrieb nach einem oder mehreren der vorhergehenden Ansprüche 1 bis 6, **dadurch gekennzeichnet, dass** die Öffnung des Profilschienenabschnittes (11) durch ein Abdeckelement (30) verschlossen ist.

18. Elektromotorischer Möbelantrieb nach Anspruch 17, **dadurch gekennzeichnet, dass** das Abdeckelement (30) aus einem flexiblen Material, vorzugsweise aus einem selbstklebenden Kunststoffstreifen besteht, so dass dieser an den die Öffnung begrenzenden Rändern festlegbar ist.

19. Elektromotorischer Möbelantrieb nach Anspruch 17, **dadurch gekennzeichnet, dass** das Abdeckelement als knicksteifer Streifen (30) ausgebildet ist, der form- und/oder kraftschlüssig an den die Öffnung begrenzenden Rändern festgelegt ist.

20. Elektromotorischer Möbelantrieb nach einem oder mehreren der vorhergehen den Ansprüche 1 bis 19, **dadurch gekennzeichnet, dass** der Führungsklotz (20) eine Durchbrechung für das Abdeckelement (30) aufweist, und dass die Durchbrechung derart ausgelegt ist, dass die die Durchbrechung begrenzenden Flächen in einem Abstand zum Abdeckelement (30) stehen.

21. Elektromotorischer Möbelantrieb nach einem oder mehreren der vorhergehenden Ansprüche 1 bis 20, **dadurch gekennzeichnet, dass** in dem Abdeckelement (30) Endschalter (23, 24) zur Begrenzung der Endstellungen der Spindelmutter (19) vorgesehen sind.

22. Elektromotorischer Möbelantrieb nach einem oder mehreren der vorhergehenden Ansprüche 1 bis 20, **dadurch gekennzeichnet, dass** an dem Profilschienenabschnitt (11) vorzugsweise innenseitig Endschalter zur Begrenzung der Endstellungen der Spindelmutter (19) vorgesehen sind.

23. Elektromotorischer Möbelantrieb nach einem oder mehreren der vorhergehenden Ansprüche 1 bis 20, **dadurch gekennzeichnet, dass** zur Begrenzung der Endstellungen der Spindelmutter (19) innerhalb des Profilschienenabschnittes (11) eine Endschalterleiste (22) vorgesehen ist, auf die die Endschalter (23, 24) aufgesetzt sind und die vorzugsweise an der Innenfläche des Profilschienenabschnittes (11) festgelegt ist.

24. Elektromotorischer Möbelantrieb nach einem oder mehreren der vorhergehenden Ansprüche 1 bis 23, **dadurch gekennzeichnet, dass** an den Stimendbereichen des Profilschienenabschnittes (11) Endkappen (25, 26) form- und/oder kraftschlüssig oder durch Schweißung festgelegt sind.

25. Elektromotorischer Möbelantrieb nach einem oder mehreren der vorhergehenden Ansprüche 1 bis 24, **dadurch gekennzeichnet, dass** aus dem Profilschienenabschnitt (11), den Endkappen (25, 26) und/oder dem Abdeckelement das Gehäuse des elektromotorischen Möbelantriebs (10) gebildet ist.

26. Elektromotorischer Möbelantrieb nach einem oder mehreren der vorhergehenden Ansprüche 1 bis 25, **dadurch gekennzeichnet, dass** der elektromotorische Möbelantrieb (10) als Einzelantrieb mit einem Antriebszug oder als Mehrfachantrieb mit mehreren Antriebszügen ausgebildet ist.

27. Elektromotorischer Möbelantrieb nach Anspruch 1, **dadurch gekennzeichnet, dass** der elektromotorische Möbelantrieb (10) mit mindestens zwei Antriebsmotoren (12) und einer entsprechenden Anzahl von Spindeln (15) ausgestattet ist, die parallel und im Abstand zueinander stehen.

28. Elektromotorischer Möbelantrieb nach Anspruch 27, **dadurch gekennzeichnet, dass** die Drehachsen der Antriebsmotoren (12) miteinander fluchten und quer zum Profilschienenabschnitt (11) stehen.

29. Elektromotorischer Möbelantrieb nach Anspruch 27 oder 28, **dadurch gekennzeichnet, dass** die Spindeln (15) höhenmäßig und in ihren Längsrichtungen versatzfrei zueinander stehen.

30. Elektromotorischer Möbelantrieb nach einem oder mehreren der vorhergehenden Ansprüche 27 bis 29, **dadurch gekennzeichnet, dass** der Möbelantrieb (10) mit einem Profilschienenabsehnitt (11) ausgestattet ist, in dem die Spindeln (15) angeordnet sind.

31. Elektromotorischer Möbelantrieb nach einem oder mehreren der vorhergehenden Ansprüche 27 bis 29, **dadurch gekennzeichnet, dass** der Profilschienenabschnitt (11) aus Einzelschienen (11d, 11e) gebildet ist, die sowohl höhenmäßig als auch in ihren Längsrichtungen versatzfrei nebeneinander angeordnet sind, wobei die Anzahl der Einzelschienen (11d, 11e) der Stückzahl der Spindeln (15) entspricht.

32. Elektromotorischer Möbelantrieb nach einem oder mehreren der vorhergehenden Ansprüche 1 bis 31, **dadurch gekennzeichnet, dass** jeder Antriebsmotor (12) als Antriebsgetriebemotor ausgebildet ist.

33. Elektromotorischer Möbelantrieb nach Anspruch 32, **dadurch gekennzeichnet, dass** das Getriebe des Antriebsgetriebemotors mit sich kreuzenden oder mit parallel und im Abstand zueinander angeordneten Wellen ausgestattet ist.

34. Elektromotorischer Möbelantrieb nach einem oder mehreren der vorhergehenden Ansprüche 1 bis 32, **dadurch gekennzeichnet, dass** der Antriebsgetriebemotor als Stabantrieb ausgebildet ist, und dass die Drehzahl herabsetzende Getriebe als Umlaufgetriebe gestaltet ist.

35. Elektromotorischer Möbelantrieb nach einem oder mehreren der vorhergehenden Ansprüche 1 bis 34, **dadurch gekennzeichnet, dass** jede Spindel (15) gegen Drehung gesichert ist und dass das Abtriebsglied des Getriebes ein Rotationskörper mit einer Innengewindebohrung ist, so dass die Spindeln in ihrer Längsrichtung verfahrbar sind.

36. Elektromotorischer Möbelantrieb nach einem oder mehreren der vorhergehenden Ansprüche 1 bis 34, **dadurch gekennzeichnet, dass** jede Spindel (15) ortsfest angeordnet ist, und dass der Antriebszug in Längsrichtung der zugehörigen Spindel (15) verfahrbar ist.

37. Elektromotorischer Möbelantrieb nach einem oder mehreren der vorhergehenden Ansprüche 1 bis 36, **dadurch gekennzeichnet, dass** jeder Antriebszug an den Profilschienenabschnitt (11) form- und/oder kraftschlüssig festgelegt ist, und dass am Antriebszug Schnapphaken angeordnet sind, die in Ausnehmungen des Profilschienenabschnittes (11) eingreifen.

38. Elektromotorischer Möbelantrieb nach einem oder mehreren der vorhergehenden Ansprüche 1 bis 36, **dadurch gekennzeichnet, dass** der Profilschienenabschnitt (11) Sicken oder Aufkantungen aufweist, an denen sich der Antriebszug abstützt, oder dass die Festlegung des Antriebszuges durch Klemmung erfolgt.

39. Elektromotorischer Möbelantrieb nach einem oder mehreren der vorhergehenden Ansprüche 1 bis 38, **dadurch gekennzeichnet, dass** zur Ansteuerung und/oder Energieversorgung des Elektromotors Steuerungs- und/oder Energieversorgungskomponenten in das Gehäuse einsetzbar oder an das Gehäuse ansetzbar sind.

40. Elektromotorischer Möbelantrieb nach Anspruch 20, **dadurch gekennzeichnet, dass** der Führungsklotz (20) Ausnehmungen und Aufsätze aufweist, die zur Anlage von Bauteilen daran angesetzt oder angeformt sind.

41. Elektromotorischer Möbelantrieb nach einem oder mehreren der vorhergehenden Ansprüche 1 - 40, **dadurch gekennzeichnet, dass** der Profilschienenabschnitt (11) aus Metall, vorzugsweise aus Stahl besteht, und dass ein Endbereich oder das beide Endbereiche des Profilschienenabschnittes (11) zur Krafteinleitung als Aufhängeelement (16, 17) ausgebildet ist bzw. sind.

## Claims

1. Electromotive furniture drive (10), including at least one drive motor (12) and at least one spindle (15), onto which is fitted a spindle nut (19), and where at least the spindle (15) or the spindles and the spindle nut (19) or the spindle nuts are located in a housing, wherein each spindle (15) and each spindle nut (19) form a drive train, **characterized in that** the housing is formed from a continuous profiled rail section (11) that is produced from a metal material and has an open cross section, **in that** the introducible forces can be diverted completely or almost completely via the profiled rail section (11) and/or via a gearing bracket (27), wherein a connection part is either part of the gearing bracket (27) or is mountable on the gearing bracket (27) as an attachment part, **in that** the basic cross section of the profiled rail section (11) is identical or **in that** the cross sections are different in a sectional manner, however they are U-shaped or C-shaped, and **in that** the drive parts forming the electromotive furniture drive (10) are realized in the manner of a modular kit, wherein each drive train is secured in the profiled rail section (11) in a positive-locking and or force-fitting manner.

2. Electromotive furniture drive according to Claim 1, **characterized in that** one end region or **in that** two end regions of the profiled rail section (11) is or are realized as a stop element or stop elements (16, 17) for the introduction of force, or **in that** one end region or **in that** two end regions of the profiled rail section (11) are each realized for accommodating a connection element.

3. Electromotive furniture drive according to Claim 1, **characterized in that** the basic cross section of the profiled rail section (11) is constant over the length, and **in that** the profiled rail section (11) is realized in one part.

4. Electromotive furniture drive according to one or more of preceding Claims 1 to 3, **characterized in that** the profiled rail section (11) is realized as a guide rail at least for the spindle nut (19).

5. Electromotive furniture drive according to one or more of the preceding claims, **characterized in that** the drive motor (12) of the electromotive furniture drive (10) is secured to a gearing bracket, which is realized in one or more parts and has two surfaces which are at right angles to each other.

6. Electromotive furniture drive according to Claim 1, **characterized in that** the profiled rail section (11) has two lateral webs (11a, 11b) that are at right angles to the axis of rotation of the motor and **in that** in each end region of a lateral web (11a, 11b) there is provided at least one bore (17) and **in that** the bores (17) of the two lateral webs (11a, 11b) are in alignment with each other.

7. Electromotive furniture drive according to Claim 6, **characterized in that** at least one bore (18) is also provided in the central web (11c) connecting the lateral webs (11a, 11b) that are parallel to each other.

8. Electromotive furniture drive according to Claim 7, **characterized in that** the bore (18) provided in the central web (11c) is offset in relation to the bores of the parallel lateral webs (11a, 11b).

9. Electromotive furniture drive according to one or more of preceding Claims 1 to 8, **characterized in that** at least the end regions of the lateral webs (11a, 11b) of the profiled rail section (11) are realized as suspension elements and **in that** a connection part realized as a suspension element forms a part integrally moulded with a gearing bracket (27), or is fitted onto the gearing bracket (27) as an attachment part.

10. Electromotive furniture drive according to Claim 9, **characterized in that** the end region of each suspension element is realized as a circular arc and **in that** the respective central point of the bore (17) is within the circular range of the circular arc.

11. Electromotive furniture drive according to Claim 1, **characterized in that** a suspension element, which is preferably located centrally between the parallel lateral webs (11a, 11b), is injection moulded onto the end region of the profiled rail section (11).

12. Electromotive furniture drive according to one or more of preceding Claims 1 to 10, **characterized in that** the end regions of the lateral webs (11a, 11b) realized as suspension elements are bent at right angles, preferably bent at right angles in such a manner that the spacing is reduced.

13. Electromotive furniture drive according to one or more of preceding Claims 1 to 12, where a lifting pipe is fixedly fitted onto the spindle nut (19) fitted onto the spindle (15), **characterized in that** the lifting pipe is produced from metal, preferably steel, and **in that** connection bores for accommodating a bolt, a pin or the like are provided in the free end region remote from the spindle nut (19).

14. Electromotive furniture drive according to one or more of preceding Claims 1 to 12, **characterized in that** the spindle nut (19) is connected to a guide block (20), which extends beyond the contour of the profiled rail section (11) at least on one side and which is provided with an aperture corresponding to the outer contour of the profiled rail section (11) for closing guidance.

15. Electromotive furniture drive according to Claim 14, **characterized in that** the spindle nut (19) and the guide block (20) form an integrally moulded part.

16. Electromotive furniture drive according to Claim 14 or 15, **characterized in that** the guide block (20) extends beyond the profiled rail section (11) on all sides.

17. Electromotive furniture drive according to one or more of preceding Claims 1 to 6, **characterized in that** the opening in the profiled rail section (11) is closed by a cover element (30).

18. Electromotive furniture drive according to Claim 17, **characterized in that** the cover element (30) is produced from a resilient material, preferably from a self-adhesive plastics material strip such that said cover element is securable to the edges defining the opening.

19. Electromotive furniture drive according to Claim 17, **characterized in that** the cover element is realized as a buckle-proof strip (30), which is secured in a positive-locking and/or force-fitting manner to the edges defining the opening.

20. Electromotive furniture drive according to one or more of preceding Claims 1 to 19, **characterized in that** the guide block (20) has an aperture for the cover element (30), and **in that** the aperture is designed in such a manner that the faces defining the aperture are at a spacing from the cover element (30).

21. Electromotive furniture drive according to one or more of preceding Claims 1 to 20, **characterized in that** limit switches (23, 24) are provided in the cover element (30) for defining the end positions of the spindle nut (19).

22. Electromotive furniture drive according to one or more of preceding Claims 1 to 20, **characterized in that** limit switches are provided preferably on the inside of the profiled rail section (11) for defining the end positions of the spindle nut (19).

23. Electromotive furniture drive according to one or more of preceding Claims 1 to 20, **characterized in that** a limit switch strip (22) is provided for defining the end positions of the spindle nut (19) within the profiled rail section (11), the limit switches (23, 24) being fitted onto said limit switch strip which is secured preferably on the inside face of the profiled rail section (11).

24. Electromotive furniture drive according to one or more of preceding Claims 1 to 23, **characterized in that** end caps (25, 26) are secured to the end face regions of the profiled rail section (11) in a positive-locking and/or form-fitting manner or by means of welding.

25. Electromotive furniture drive according to one or more of preceding Claims 1 to 24, **characterized in that** the housing of the electromotive furniture drive (10) is formed from the profiled rail section (11), the end caps (25, 26) and/or the cover element.

26. Electromotive furniture drive according to one or more of preceding Claims 1 to 25, **characterized in that** the electromotive furniture drive (10) is realized as a single drive with one drive train or as a multiple drive with a plurality of drive trains.

27. Electromotive furniture drive according to Claim 1, **characterized in that** the electromotive furniture drive (10) is provided with at least two drive motors (12) and a corresponding number of spindles (15), which are parallel to each other and at a spacing from each other.

28. Electromotive furniture drive according to Claim 27, **characterized in that** the axes of rotation of the drive motors (12) are in alignment with each other and are at right angles to the profiled rail section (11).

29. Electromotive furniture drive according to Claim 27 or 28, **characterized in that** the spindles (15) are arranged vertically and in their longitudinal directions without misalignment one relative to another.

30. Electromotive furniture drive according to one or more of preceding Claims 27 to 29, **characterized in that** the furniture drive (10) is provided with a profiled rail section (11) in which the spindles (15) are located.

31. Electromotive furniture drive according to one or more of preceding Claims 27 to 29, **characterized in that** the profiled rail section (11) is formed from individual rails (11d, 11e), which are located without misalignment adjacent to each other both vertically and in their longitudinal directions, wherein the number of individual rails (11d, 11e) corresponds to the quantity of spindles (15).

32. Electromotive furniture drive according to one or more of preceding Claims 1 to 31, **characterized in that** each drive motor (12) is realized as a drive gear motor.

33. Electromotive furniture drive according to Claim 32, **characterized in that** the gearing of the drive gear motor is provided with intersecting shafts or with shafts that are located parallel with each other and at a spacing from each other.

34. Electromotive furniture drive according to one or more of preceding Claims 1 to 32, **characterized in that** the drive gear motor is realized as a bar drive, and **in that** the gearing lowering the speed is developed as planetary gearing.

35. Electromotive furniture drive according to one or more of preceding Claims 1 to 34, **characterized in that** each spindle (15) is secured against rotation and **in that** the driven member of the gearing is a rotary body with an internal threaded bore such that the spindles are moveable in their longitudinal direction.

36. Electromotive furniture drive according to one or more of preceding Claims 1 to 34, **characterized in that** each spindle (15) is located in a stationary manner, and **in that** the drive train is moveable in the longitudinal direction of the associated spindle (15).

37. Electromotive furniture drive according to one or more of preceding Claims 1 to 36, **characterized in that** each drive train is secured in a positive-locking and/or force-fitting manner to the profiled rail section (11), and **in that** snap-on hooks, which engage in recesses of the profiled rail section (11), are located at the drive train.

38. Electromotive furniture drive according to one or more of preceding Claims 1 to 36, **characterized in that** the profiled rail section (11) has beading or edging on which the drive train is supported, or **in that** the drive train is secured by means of clamping.

39. Electromotive furniture drive according to one or more of preceding Claims 1 to 38, **characterized in that** for actuating and/or for supplying power to the electric motor, control components and/or power supplying components are insertable into the housing or can be mounted on the housing.

40. Electromotive furniture drive according to Claim 20, **characterized in that** the guide block (20) has recesses and attachments which are mounted or integrally moulded thereon for the attachment of components.

41. Electromotive furniture drive according to one or more of preceding Claims 1 to 40, **characterized in that** the profiled rail section (11) is produced from metal, preferably steel, and **in that** one end region or in that two end regions of the profiled rail section (11) is or are realized as suspension element (16, 17) for force transmission.

## Revendications

1. Mécanisme d'entraînement (10) à moteur électrique pour meubles, comportant au moins un moteur d'entraînement (12) et au moins une broche (15) sur laquelle est monté un écrou de broche (19), et selon lequel au moins la broche (15) ou les broches et l'écrou de broche (19) ou les écrous de broche sont disposés dans un boîtier, sachant que chaque broche (15) et chaque écrou de broche (19) forment une ligne d'entraînement, **caractérisé en ce que** le boîtier est formé d'un tronçon continu de rail profilé (11), constitué d'un matériau métallique et ayant une section ouverte, **en ce que** les forces qui peuvent être introduites peuvent être évacuées totalement ou quasi totalement par l'intermédiaire du tronçon de rail profilé (11) et/ou d'un coude de transmission (27), sachant qu'une partie de raccordement, soit fait partie du coude de transmission (27), soit peut être installée en tant qu'accessoire sur le coude de transmission (27), **en ce que** la section de base du tronçon de rail profilé (11) est uniforme ou **en ce que** les sections sont par portions différentes, mais en forme de U ou de C, et **en ce que** les éléments d'entraînement qui forment le mécanisme d'entraînement (10) à moteur électrique pour meubles sont réalisés à la manière d'un jeu de construction, chaque ligne d'entraînement étant fixée dans le tronçon de rail profilé (11) par engagement positif et/ou à force.

2. Mécanisme d'entraînement à moteur électrique pour meubles selon la revendication 1, **caractérisé en ce qu'**une région terminale ou **en ce que** les deux régions terminales du tronçon de rail profilé (11) est ou sont, pour l'introduction de forces, réalisées sous forme d'élément(s) de butée (16, 17), ou en ce qu'une région terminale ou **en ce que** les deux régions terminales du tronçon de rail profilé (11) sont conçues pour recevoir respectivement un élément de raccordement.

3. Mécanisme d'entraînement à moteur électrique pour meubles selon la revendication 1, **caractérisé en ce que** la section de base du tronçon de rail profilé (11) est identique sur toute la longueur, et **en ce que** le tronçon de rail profilé (11) est réalisé d'un seul tenant.

4. Mécanisme d'entraînement à moteur électrique pour meubles selon une ou plusieurs des revendications précédentes 1 à 3, **caractérisé en ce que** le tronçon de rail profilé (11) est réalisé sous forme de rail de guidage au moins pour l'écrou de broche (19).

5. Mécanisme d'entraînement à moteur électrique pour meubles selon une ou plusieurs des revendications précédentes, **caractérisé en ce que** le moteur d'entraînement (12) du mécanisme d'entraînement (10) à moteur électrique pour meubles est fixé sur un coude de transmission qui est réalisé en une ou plusieurs parties et qui présente deux faces en angle droit l'une par rapport à l'autre.

6. Mécanisme d'entraînement à moteur électrique pour meubles selon la revendication 1, **caractérisé en ce que** le tronçon de rail profilé (11) présente deux branches latérales (11a, 11 b) perpendiculaires à l'axe de rotation du moteur, et **en ce qu'**au moins un perçage (17) est prévu dans chaque région terminale d'une branche latérale (11a, 11b), et **en ce que** les perçages (17) des deux branches latérales (11a, 11 b) sont mutuellement alignés.

7. Mécanisme d'entraînement à moteur électrique pour meubles selon la revendication 6, **caractérisé en ce qu'**au moins un perçage (18) est également prévu dans la partie médiane (11c) qui relie les branches latérales (11 a, 11 b) mutuellement parallèles.

8. Mécanisme d'entraînement à moteur électrique pour meubles selon la revendication 7, **caractérisé en ce que** le perçage (18) prévu dans la partie médiane (11c) se trouve en décalage par rapport aux perçages des branches latérales parallèles (11 a, 11 b).

9. Mécanisme d'entraînement à moteur électrique pour meubles selon une ou plusieurs des revendications précédentes 1 à 8, **caractérisé en ce qu'**au moins les régions terminales des branches latérales (11a, 11b) du tronçon de rail profilé (11) sont réalisées sous forme de pattes de suspension, et **en ce qu'**un élément de raccordement réalisé sous forme de patte de suspension forme une pièce moulée d'un seul tenant avec un coude de transmission (27), ou est rapporté en tant qu'accessoire sur le coude de transmission (27).

10. Mécanisme d'entraînement à moteur électrique pour meubles selon la revendication 9, **caractérisé en ce que** la région terminale de chaque patte de suspension est réalisée en arc de cercle, et **en ce que** le centre respectif du perçage (17) se trouve sur le coup de compas de l'arc de cercle.

11. Mécanisme d'entraînement à moteur électrique pour meubles selon la revendication 1, **caractérisé en ce qu'**une patte de suspension placée de préférence au milieu entre les branches latérales parallèles (11 a, 11 b) est moulée par injection sur la région terminale du tronçon de rail profilé (11).

12. Mécanisme d'entraînement à moteur électrique pour meubles selon une ou plusieurs des revendications précédentes 1 à 10, **caractérisé en ce que** les régions terminales, réalisées sous forme de pattes de suspension, des branches latérales (11a, 11 b) sont contrecoudées, de préférence contrecoudées de telle sorte que leur espacement est réduit.

13. Mécanisme d'entraînement à moteur électrique pour meubles selon une ou plusieurs des revendications précédentes 1 à 12, selon lequel un tube de levage est fixement installé sur l'écrou de broche (19) monté sur la broche (15), **caractérisé en ce que** le tube de levage est réalisé en métal, de préférence en acier, et **en ce que** des perçages de raccordement destinés à recevoir un boulon, une tige ou analogues sont prévus dans la région terminale libre opposée à l'écrou de broche (19).

14. Mécanisme d'entraînement à moteur électrique pour meubles selon une ou plusieurs des revendications précédentes 1 à 12, **caractérisé en ce que** l'écrou de broche (19) est relié à une cale de guidage (20) qui dépasse du contour du tronçon de rail profilé (11) au moins sur un côté et qui est pourvue d'un évidement, permettant un guidage avec fermeture, qui correspond au contour extérieur du tronçon de rail profilé (11).

15. Mécanisme d'entraînement à moteur électrique pour meubles selon la revendication 14, **caractérisé en ce que** l'écrou de broche (19) et la cale de guidage (20) forment une pièce moulée d'un seul tenant.

16. Mécanisme d'entraînement à moteur électrique pour meubles selon la revendication 14 ou 15, **caractérisé en ce que** la cale de guidage (20) dépasse du tronçon de rail profilé (11) de tous côtés.

17. Mécanisme d'entraînement à moteur électrique pour meubles selon une ou plusieurs des revendications précédentes 1 à 6, **caractérisé en ce que** l'ouverture du tronçon de rail profilé (11) est fermée par un élément de recouvrement (30).

18. Mécanisme d'entraînement à moteur électrique pour meubles selon la revendication 17, **caractérisé en ce que** l'élément de recouvrement (30) est constitué d'un matériau flexible, de préférence d'une bande de matière plastique autocollante, de sorte que cette bande peut être fixée sur les bords qui délimitent l'ouverture.

19. Mécanisme d'entraînement à moteur électrique pour meubles selon la revendication 17, **caractérisé en ce que** l'élément de recouvrement est réalisé sous forme de bande (30) résistante au flambage, qui est fixée par engagement positif et/ou à force sur les bords qui délimitent l'ouverture.

20. Mécanisme d'entraînement à moteur électrique pour meubles selon une ou plusieurs des revendications précédentes 1 à 19, **caractérisé en ce que** la cale de guidage (20) présente un évidement pour l'élément de recouvrement (30), et **en ce que** l'évidement est conçu de telle sorte que les faces qui délimitent l'évidement se trouvent à distance de l'élément de recouvrement (30).

21. Mécanisme d'entraînement à moteur électrique pour meubles selon une ou plusieurs des revendications précédentes 1 à 20, **caractérisé en ce que** des commutateurs de fin de course (23, 24) sont prévus dans l'élément de recouvrement (30) pour limiter les positions finales de l'écrou de broche (19).

22. Mécanisme d'entraînement à moteur électrique pour meubles selon une ou plusieurs des revendications précédentes 1 à 20, **caractérisé en ce que** des commutateurs de fin de course sont prévus de préférence sur le côté intérieur sur le tronçon de rail profilé (11) pour limiter les positions finales de l'écrou de broche (19).

23. Mécanisme d'entraînement à moteur électrique pour meubles selon une ou plusieurs des revendications précédentes 1 à 20, **caractérisé en ce qu'**une barrette (22) de commutateurs de fin de course est prévue à l'intérieur du tronçon de rail profilé (11) pour limiter les positions finales de l'écrou de broche (19), barrette sur laquelle sont installés les commutateurs de fin de course (23, 24) et qui est de préférence fixée sur la surface intérieure du tronçon de rail profilé (11).

24. Mécanisme d'entraînement à moteur électrique pour meubles selon une ou plusieurs des revendications précédentes 1 à 23, **caractérisé en ce que** des coiffes terminales (25, 26) sont fixées par engagement positif et/ou à force ou par soudage sur les régions terminales frontales du tronçon de rail profilé (11).

25. Mécanisme d'entraînement à moteur électrique pour meubles selon une ou plusieurs des revendications précédentes 1 à 24, **caractérisé en ce que** le boîtier du mécanisme d'entraînement (10) à moteur électrique pour meubles est formé du tronçon de rail profilé (11), des coiffes terminales (25, 26) et/ou de l'élément de recouvrement.

26. Mécanisme d'entraînement à moteur électrique pour meubles selon une ou plusieurs des revendications précédentes 1 à 25, **caractérisé en ce que** le mécanisme d'entraînement (10) à moteur électrique pour meubles est réalisé sous forme de mécanisme d'entraînement individuel avec une ligne d'entraînement ou sous forme de mécanisme d'entraînement multiple avec plusieurs lignes d'entraînement.

27. Mécanisme d'entraînement à moteur électrique pour meubles selon la revendication 1, **caractérisé en ce que** le mécanisme d'entraînement (10) à moteur électrique pour meubles est équipé d'au moins deux moteurs d'entraînement (12) et d'un nombre correspondant de broches (15), qui sont parallèles et à distance mutuelle.

28. Mécanisme d'entraînement à moteur électrique pour meubles selon la revendication 27, **caractérisé en ce que** les axes de rotation des moteurs d'entraînement (12) sont mutuellement alignés et perpendiculaires au tronçon de rail profilé (11).

29. Mécanisme d'entraînement à moteur électrique pour meubles selon la revendication 27 ou 28, **caractérisé en ce que** les broches (15) sont dépourvues de décalage mutuel en hauteur et dans leurs directions longitudinales.

30. Mécanisme d'entraînement à moteur électrique pour meubles selon une ou plusieurs des revendications précédentes 27 à 29, **caractérisé en ce que** le mécanisme d'entraînement (10) pour meubles est équipé d'un tronçon de rail profilé (11) dans lequel sont disposées les broches (15).

31. Mécanisme d'entraînement à moteur électrique pour meubles selon une ou plusieurs des revendications précédentes 27 à 29, **caractérisé en ce que** le tronçon de rail profilé (11) est formé de rails individuels (11 d, 11 e) qui sont juxtaposés sans décalage tant en hauteur que dans leurs directions longitudinales, le nombre de rails individuels (11d, 11e) correspondant au nombre de broches (15).

32. Mécanisme d'entraînement à moteur électrique pour meubles selon une ou plusieurs des revendications précédentes 1 à 31, **caractérisé en ce que** chaque moteur d'entraînement (12) est réalisé sous forme de motoréducteur.

33. Mécanisme d'entraînement à moteur électrique pour meubles selon la revendication 32, **caractérisé en ce que** la transmission du motoréducteur est dotée d'arbres qui se croisent ou qui sont disposés à distance et parallèlement entre eux.

34. Mécanisme d'entraînement à moteur électrique pour meubles selon une ou plusieurs des revendications précédentes 1 à 32, **caractérisé en ce que** le motoréducteur est réalisé sous forme d'entraînement en barre, et **en ce que** la transmission réduisant le régime est conçue sous forme d'engrenage planétaire.

35. Mécanisme d'entraînement à moteur électrique pour meubles selon une ou plusieurs des revendications précédentes 1 à 34, **caractérisé en ce que** chaque broche (15) est bloquée en rotation, et **en ce que** l'organe de sortie de la transmission est un corps rotatif doté d'un perçage fileté intérieur, de sorte que les broches sont mobiles dans leur direction longitudinale.

36. Mécanisme d'entraînement à moteur électrique pour meubles selon une ou plusieurs des revendications précédentes 1 à 34, **caractérisé en ce que** chaque broche (15) est disposée stationnairement, et **en ce que** la ligne d'entraînement peut être déplacée dans la direction longitudinale de la broche associée (15).

37. Mécanisme d'entraînement à moteur électrique pour meubles selon une ou plusieurs des revendications précédentes 1 à 36, **caractérisé en ce que** chaque ligne d'entraînement est fixée par engagement positif et/ou à force sur le tronçon de rail profilé (11), et **en ce que** des crochets à enclenchement, qui s'engagent dans des évidements du tronçon de rail profilé (11), sont disposés sur la ligne d'entraînement.

38. Mécanisme d'entraînement à moteur électrique pour meubles selon une ou plusieurs des revendications précédentes 1 à 36, **caractérisé en ce que** le tronçon de rail profilé (11) présente des moulures ou des chants contre lesquels s'appuie la ligne d'entraînement, ou **en ce que** la fixation de la ligne d'entraînement s'effectue par serrage.

39. Mécanisme d'entraînement à moteur électrique pour meubles selon une ou plusieurs des revendications précédentes 1 à 38, **caractérisé en ce que** des composants de commande et/ou d'alimentation en énergie, pour l'asservissement et/ou l'alimentation en énergie du moteur électrique, peuvent être insérés dans le boîtier ou rapportés sur le boîtier.

40. Mécanisme d'entraînement à moteur électrique pour meubles selon la revendication 20, **caractérisé en ce que** la cale de guidage (20) présente des évidements et des saillies qui sont formés ou rapportées pour y appliquer des éléments.

41. Mécanisme d'entraînement à moteur électrique pour meubles selon une ou plusieurs des revendications précédentes 1 à 40, **caractérisé en ce que** le tronçon de rail profilé (11) est réalisé en métal, de préférence en acier, et **en ce qu'**une région terminale ou **en ce que** les deux régions terminales du tronçon de rail profilé (11) est ou sont, pour l'introduction de forces, réalisées sous forme d'éléments de suspension (16, 17).
